Europäisches Patentamt

European Patent Office

Office européen des brevets

(19)

(11) **EP 1 054 243 B1**

(12) **FASCICULE DE BREVET EUROPEEN**

(45) Date de publication et mention
de la délivrance du brevet:
**04.01.2006 Bulletin 2006/01**

(51) Int Cl.:
***G01H 1/00*** *(2006.01)*

(21) Numéro de dépôt: **99810438.4**

(22) Date de dépôt: **19.05.1999**

(54) **Procédé et système de mesure vibratoire combinée**

Verfahren und Anordnung zur kombinierten Schwingungsmessung

Method and means for combined vibration measurement

(84) Etats contractants désignés:
**AT BE CH DE DK ES FR GB IT LI NL**

(43) Date de publication de la demande:
**22.11.2000 Bulletin 2000/47**

(73) Titulaire: **VIBRO-METER SA**
**CH-1701 Fribourg (CH)**

(72) Inventeurs:
• **Broillet, Bernard**
**1721 Misery (CH)**

• **Monot, José Denis**
**1630 Bulle (CH)**
• **Fromaigeat, Luc Yves Louis**
**1700 Fribourg (CH)**

(74) Mandataire: **AMMANN PATENTANWÄLTE AG**
**BERN**
**Schwarztorstrasse 31**
**3001 Bern (CH)**

(56) Documents cités:
**WO-A-87/05570** **GB-A- 2 054 852**
**US-A- 3 757 565** **US-A- 4 063 450**

## Description

L'invention concerne un procédé pour mesurer les vibrations mécaniques d'un objet.

L'invention concerne en outre un système pour mesurer les vibrations mécaniques d'un objet (voir US-A-3 757 565).

A titre d'exemple, un spectre de fréquences d'un signal représentatif des vibrations d'un compresseur axial ou d'une autre machine tournante industrielle ou aéronautique présente en général deux domaines assez différents:

1) En basses fréquences, par exemple dans une gamme de fréquences inférieures à 1000 ou 2000 Hertz, le signal vibratoire a un niveau assez faible en terme d'accélération et est par exemple inférieur à 1 m/s$^2$.

Dans le domaine aéronautique et industriel, un signal vibratoire en basses fréquences est transformé ou mesuré en terme de vitesse vibratoire qui est représentatif de l'énergie vibratoire, souvent destructrice, agissant sur une machine tournante.

Les plages de basses fréquences, et niveaux de signal vibratoire acceptables dans ces plages, sont largement normalisés en fonction des machines, par exemple:

- selon normes ISO 2954/VDI2056, entre 10 et 1000 Hertz,
- selon norme API 670, entre 10 et 2500 Hertz, etc.

En basses fréquences, le niveau du signal vibratoire à la fréquence fondamentale de rotation présente un intérêt particulier pour l'équilibrage des rotors principaux (par exemple dans le cas d'une soufflante, d'un compresseur et d'une turbine, d'une hélice, etc.). De même, le niveau du signal vibratoire des harmoniques en basses fréquences présente un certain intérêt pour certaines analyses.

2) En moyennes et hautes fréquences (par exemple à des fréquences supérieures à 1000 Hertz), on trouve dans le spectre de fréquences d'un signal représentatif des vibrations d'un objet, des raies correspondant par exemple à des vibrations d'engrènements, des multiples et modulations des telles raies, des raies correspondant à des passages d'aubages, les signatures de paliers à roulement, etc.

- Dans le domaine industriel, un signal vibratoire en moyennes et hautes fréquences est mesuré en terme d'accélération vibratoire, et son niveau est relativement élevé et souvent supérieur à 10 m/s$^2$.

- Dans le domaine aéronautique civil et surtout militaire, l'accélération vibratoire en hautes fréquences peut atteindre 10000 m/s$^2$, ce qui peut provoquer des saturations du premier étage d'amplification de la chaîne de mesure.

Les différences très marquées, indiquées ci-dessus entre les caractéristiques d'un signal vibratoire en basses fréquences et les caractéristiques du même signal en moyennes et hautes fréquences, font que, pour certaines applications comme par exemple pour mesurer les vibrations agissant sur un groupe turbo-propulseur d'avion, on est conduit à installer deux chaînes de mesure différentes: une première chaîne de mesure pour surveiller, dans le domaine de basses fréquences, la composante du signal vibratoire correspondant à des vibrations en rapport avec la rotation de l'hélice, et une deuxième chaîne de mesure pour surveiller, dans le domaine de hautes fréquences, la composante du signal vibratoire correspondant à des vibrations de l'engrènement du réducteur. Une telle solution a comme désavantages non seulement un renchérissement du système de mesure, mais aussi une diminution de la fiabilité d'un tel système, celui-ci étant plus complexe et, par conséquent, la probabilité de défauts étant plus élevée.

Le but de la présente invention est de proposer un procédé et un système pour mesurer les vibrations mécaniques permettant d'éliminer les désavantages mentionnés ci-dessus. Ce but est atteint en particulier par les procédés selon les revendications 1 et 2, et par les systèmes définis par les revendications 3 et 4.

L'avantage principal de la présente invention est qu'elle permet d'obtenir à partir d'un seul transducteur et au moyen d'une seule chaîne de mesure un signal de sortie unique, lequel dans le domaine de basses fréquences correspond à la vitesse vibratoire, et dans le domaine de moyennes et hautes fréquences correspond à l'accélération vibratoire. L'information ainsi obtenue sur la vitesse vibratoire est utilisable pour quantifier la sévérité des vibrations en basse fréquence, et, prendre les mesures nécessaires pour protéger la machine, tandis que l'information obtenue sur l'accélération vibratoire est utilisable surtout pour le diagnostic et le suivi de l'état de santé des composants mécaniques tels que roulements, aubages et engrenages, lesquels génèrent particulièrement des vibrations en hautes fréquences, lorsque leur état mécanique se dégrade.

L'invention offre en outre l'avantage suivant:

Elle permet soit d'augmenter le niveau du signal en basses fréquences, où on est souvent limité par des problèmes de bruit de fond des chaînes de mesure, soit de diminuer les amplitudes en hautes fréquences, qui pourraient provoquer des saturations dans la suite de la chaîne de mesure.

Dans ces deux cas, l'avantage réside dans une optimisation de la dynamique du signal. Sur un exemple simple de turbo-alternateur industriel, on a calculé que la dynamique nécessaire était optimisée de près de 30 dB. Cette amélioration réduit les exigences de performance pour l'aval des chaînes d'acquisition et permet par exemple

- une simplification des atténuateurs ou amplificateurs d'entrée de l'unité de traitement de signal, et
- une moindre exigence pour la résolution des convertisseurs analogique-numérique (CAN), en terme de nombre de bits nécessaires.

L'invention permet donc d'atteindre simultanément deux buts, d'une part une amélioration de la dynamique dans le traitement du signal de mesure, et d'autre part la mise à disposition de deux grandeurs physiques d'usage courant en analyse vibratoire, accélération et vitesse, et cela, sur un signal de sortie unique provenant d'un seul capteur.

Un autre avantage de l'invention est le fait qu'elle permet une augmentation de la productivité des mesures que l'on peut effectuer avec un système de mesure de vibrations mécaniques. En effet, pour des raisons de dynamique dans le traitement des signaux, il était jusqu'à présent nécessaire d'effectuer deux analyses séparées: l'une dans la bande des basses fréquences, et l'autre dans la bande des moyennes et hautes fréquences. Chacune des analyses consiste en un traitement de type FFT (Fast Fourier Transform) moyenné, donc nécessairement long en temps, pour le personnel et pour le processeur. Comme la présente invention permet d'adapter la dynamique du signal, l'analyse du signal de mesure peut s'effectuer en un seul passage, d'où un gain de temps et une simplification dans la gestion de la base de données vibratoire.

Par application répétée du procédé selon l'invention, il est possible d'obtenir un signal de sortie unique porteur d'information sur trois grandeurs physiques telles que déplacement, vitesse et accélération. Les applications de cette variante sont cependant plus limitées.

Des formes d'exécution de l'invention sont décrites ci-après à titre d'exemples et à l'aide des dessins en annexe dans lesquels:

La figure 1 montre un schéma de principe d'un premier système selon l'invention,

la figure 2 montre le schéma bloc d'une première forme d'exécution d'un système dont le schéma de principe est représenté par la figure 1,

la figure 3 montre le schéma bloc d'une deuxième forme d'exécution d'un système dont le schéma de principe est représenté par la figure 1,

la figure 4 montre le schéma bloc d'une troisième forme d'exécution d'un système dont le schéma de principe est représenté par la figure 1,

la figure 5 montre un schéma de principe d'un deuxième système selon l'invention,

la figure 6 montre le schéma bloc d'une première forme d'exécution d'un système dont le schéma de principe est représenté par la figure 5,

la figure 7 montre le schéma bloc d'une deuxième forme d'exécution d'un système dont le schéma de principe est représenté par la figure 5,

la figure 8 montre la courbe typique de réponse en fréquence d'un système selon l'invention.

EXEMPLES D'UN PREMIER SYSTEME ET D'UN PREMIER PROCEDE SELON L'INVENTION

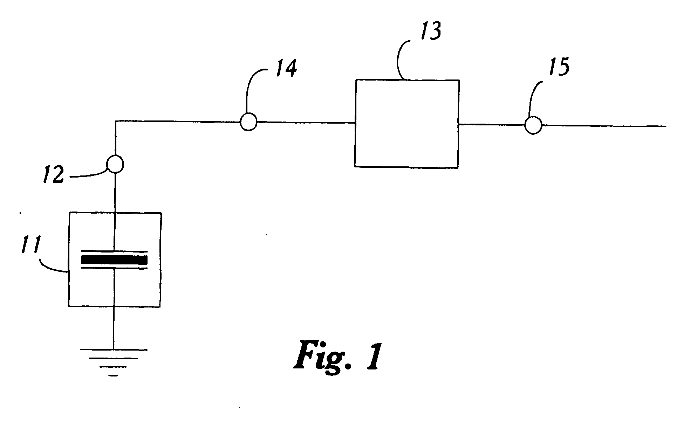

Comme représenté par le schéma de principe de la figure 1, un premier système selon l'invention pour mesurer les vibrations mécaniques d'un objet comprend un transducteur 11), lequel est monté sur un objet soumis à des vibrations, et un circuit électronique 13).

Le transducteur 11 a une sortie 12 sur laquelle il fournit un signal représentatif de l'accélération du mouvement vibratoire de l'objet. Ce signal a un spectre de fréquences comprenant une bande dite de basses fréquences, au dessous d'une fréquence dite de transition et une bande dite de hautes fréquences, au dessus de ladite fréquence de transition.

Le circuit électronique 13 a une entrée 14 connectée à la sortie 12 du transducteur 11 et une sortie 15. Le circuit 13 sert à traiter le signal fourni à la sortie 12 du transducteur 11. Le circuit 13 fournit sur sa sortie 15 un signal de sortie, lequel dans ladite bande de basses fréquences correspond à l'intégrale mathématique en fonction du temps du signal de sortie du transducteur 11, et dans ladite bande de hautes fréquences correspond audit signal de sortie du transducteur 11. Le signal de sortie fourni à la sortie 15 du circuit électronique 13 est donc tel que, dans ladite bande de basses fréquences, il correspond à la vitesse du mouvement vibratoire de l'objet, et dans ladite bande de hautes fréquences, il correspond à l'accélération du mouvement vibratoire de l'objet.

Le système de mesure selon la figure 1 permet donc la mise en oeuvre d'un premier procédé selon l'invention caractérisé en ce qu'il comprend:

le traitement d'un signal d'entrée représentatif d'une accélération en rapport avec une vibration mécanique de l'objet examiné, ledit signal d'entrée ayant un spectre de fréquences comprenant une bande dite de basses fréquences, au-dessous d'une fréquence dite de transition et une bande dite de hautes fréquences, au dessus de ladite fréquence de transition, ledit procédé effectuant ledit traitement dudit signal d'entrée au moyen d'un circuit électronique pour produire un signal de sortie tel que le signal fourni à la sortie 15 du circuit électronique 13, ledit signal de sortie étant tel que

dans ladite bande de basses fréquences, il correspond à l'intégrale mathématique en fonction du temps dudit signal d'entrée, c'est-à-dire à la vitesse vibratoire dudit objet, et

dans ladite bande de hautes fréquences, il correspond audit signal d'entrée, c'est-à-dire à l'accélération vibratoire dudit objet.

PREMIER EXEMPLE D'UN SYSTEME SELON LA FIGURE 1

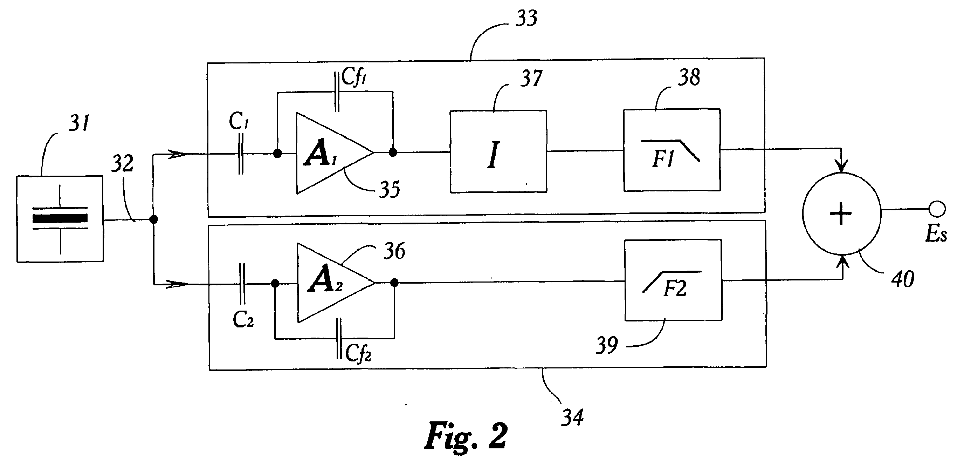

La figure 2 montre le schéma bloc d'un premier exemple d'un système de mesure, dont le schéma de principe est montré par la figure 1. Le système montré par la figure 2 comporte: un transducteur 31 monté sur un objet soumis à des vibrations (objet non-représenté sur la figure 2) et un circuit électronique pour le traitement du signal de sortie fourni par le transducteur 31.

Le transducteur 31 a la fonction d'accéléromètre et délivre comme signal de sortie une charge électrique Q sur une ligne 32. Cette charge électrique Q est proportionnelle à l'accélération de l'objet sur toute la gamme des fréquences d'intérêt.

Le circuit électronique pour le traitement du signal de sortie fourni par le transducteur 31 sur la ligne 32 comporte deux branches 33, 34. Chacune de ces branches comporte un diviseur de charge C1, respectivement C2 permettant d'optimiser la répartition de la dynamique, suivi d'un amplificateur de charge 35, respectivement 36. Des capacités de contre-réaction $Cf_1$, respectivement $Cf_2$ permettent de contrôler les gains des amplificateurs 35 respectivement 36. Les bandes de fréquences transmises par ces amplificateurs peuvent être limitées. Dans la première branche 33 l'amplificateur 35 est suivi d'un intégrateur 37, lequel transforme le signal correspondant à l'accélération fourni à la sortie de l'amplificateur 35 en un signal correspondant à la vitesse. L'intégrateur 37 est suivi d'un filtre passe-bas 38, dont la bande passante s'étend de $f_0$ à $f_1$, $f_0$ étant la fréquence minimale d'intérêt, et $f_1$ étant la fréquence dite de transition. Dans la deuxième branche 34, l'amplificateur 36 est suivi directement d'un filtre passe-haut 39 dont la bande passante s'étend de $f_1$ à $f_2$, $f_2$ étant la fréquence maximale d'intérêt. Les signaux de sortie des deux branches 33 et 34 sont appliquées aux entrées d'un sommateur 40, lequel fournit un signal de sortie $E_s$, dont l'expression mathématique est:

$$E_s = dx/dt = x' \quad \text{dans l'intervalle } [f_0; f_1]$$

$$E_s = d^2x/dt^2 = x'' \quad \text{dans l'intervalle } [f_1; f_2]$$

d'où:

$$E_s = (x'[f_0; f_1]) \oplus (x''[f_1; f_2])$$

La variable x représentant le déplacement vibratoire.

DEUXIEME EXEMPLE D'UN SYSTEME SELON LA FIGURE 1

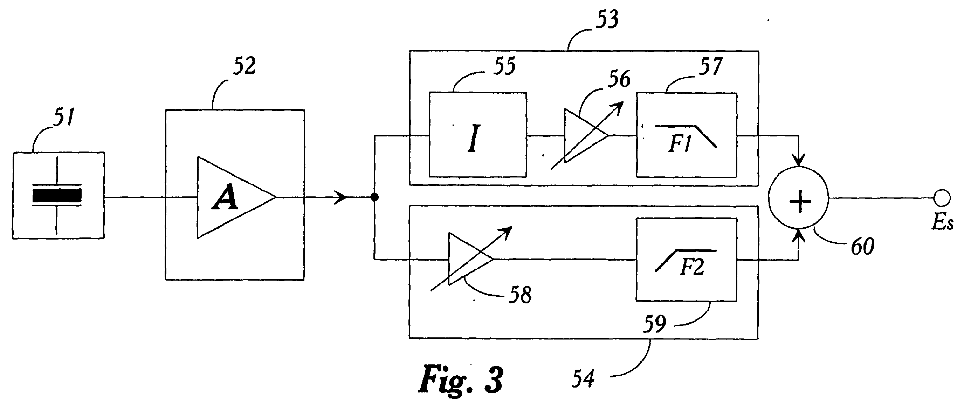

La figure 3 montre le schéma bloc d'un deuxième exemple d'un système de mesure, dont le schéma de principe est montré par la figure 1. Le système montré par la figure 3 comporte: un transducteur 51 monté sur un objet soumis à des vibrations (objet non-représenté sur la figure 3) et un circuit électronique pour le traitement du signal de sortie fourni par le transducteur 51.

Le transducteur 51 a la fonction d'accéléromètre et délivre comme signal de sortie une charge électrique Q proportionnelle à l'accélération de l'objet sur toute la gamme de fréquences d'intérêt.

Le transducteur 51 est suivi d'un amplificateur de charge 52 possédant une dynamique adaptée dans toute la plage de fréquences utile. L'amplificateur de charge 52 est suivi de deux branches 53, 54 pour le traitement de son signal de sortie, lequel correspond à l'accélération de l'objet.

La branche 53 comprend un intégrateur 55, lequel transforme le signal fourni à la sortie de l'amplificateur 52 et correspondant à l'accélération en un signal correspondant à la vitesse. L'intégrateur 55 est suivi d'un amplificateur à gain ajustable 56, lequel est suivi d'un filtre passe-bas 57, dont la bande passante s'étend de $f_0$ à $f_1$.

La branche 54 comprend un amplificateur à gain ajustable 58 suivi d'un filtre passe-haut 59, dont la bande passante s'étend de $f_1$ à $f_2$

Les amplificateurs à gain ajustable 56 et 58 permettent de maîtriser les deux sensibilités, en vitesse et en accélération.

Les signaux de sortie des deux branches 53 et 54 sont appliquées aux entrées d'un sommateur 60, lequel fournit un signal de sortie $E_s$ dont l'expression mathématique est la même que pour l'exemple décrit précédemment à l'aide de la figure 2:

$$\mathbf{E_s = dx/dt = x'} \quad \text{dans l'intervalle } [f_0;f_1]$$

$$\mathbf{E_s = d^2x/dt^2 = x''} \quad \text{dans l'intervalle } [f_1;f_2]$$

d'où:

$$\mathbf{E_s = (x'[f_0;f_1]) \oplus (x''[f_1;f_2])}$$

La variable x représentant le déplacement vibratoire.

TROISIEME EXEMPLE D'UN SYSTEME SELON LA FIGURE 1

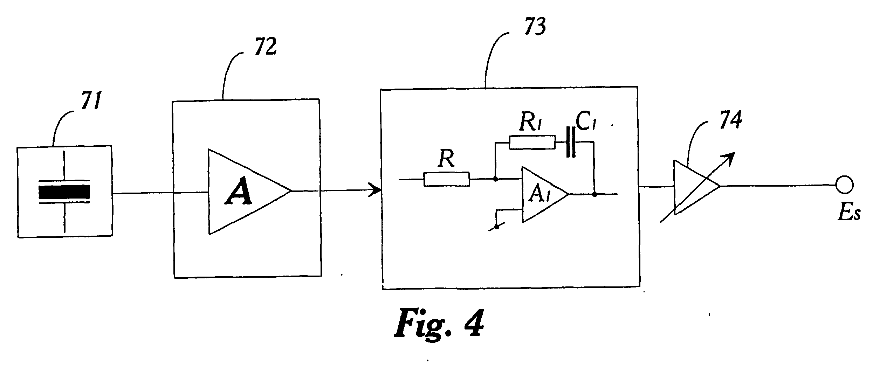

La figure 4 montre le schéma bloc d'un troisième exemple d'un système de mesure, dont le schéma de principe est montré par la figure 1. Le système montré par la figure 4 comporte: un transducteur 71 monté sur un objet soumis à des vibrations (objet non-représenté sur la figure 4) et un circuit électronique pour le traitement du signal de sortie fourni par le transducteur 71.

Le transducteur 71 a la fonction d'accéléromètre et délivre comme signal de sortie une charge électrique Q proportionnelle à l'accélération de l'objet sur toute la gamme de fréquences d'intérêt.

Le transducteur 71 est suivi d'un amplificateur de charge 72 possédant une dynamique adaptée dans toute la plage de fréquences utile. L'amplificateur de charge 72 est suivi d'un circuit 73 pour le traitement de son signal de sortie, lequel correspond à l'accélération de l'objet. Le circuit 73 est à son tour suivi d'un amplificateur à gain ajustable 74.

Le circuit 73 est un intégrateur limité I/P, lequel a la structure montré dans la figure 4. Dans le circuit 73 le signal de sortie fourni par l'amplificateur 72 subit au sens électronique du terme une intégration I/P dite "limitée". Le terme d'intégration "limitée" se justifie par le fait que le circuit I/P agit comme un intégrateur mathématique dans la plage des basses fréquences jusqu'à la fréquence dite de transition $f_1$, domaine où l'impédance de la contre réaction de l'amplificateur qui forme partie de l'intégrateur I/P est essentiellement capacitive, puis devient résistive pour le domaine des hautes fréquences. La dite fréquence de transition $f_1$ obéit à la relation:

$$\mathbf{f1 = 1 / 2\pi R_1 C_1}$$

Le signal de sortie fourni par le circuit 73 est amplifié par l'amplificateur à gain ajustable 74.

L'amplificateur à gain ajustable 74 fournit un signal de sortie $E_s$ dont l'expression mathématique est la même que pour les exemples décrits précédemment à l'aide des figures 2 et 3:

$$E_s = dx/dt = x' \quad \text{dans l'intervalle } [f_0; f_1]$$

$$E_s = d^2x/dt^2 = x'' \quad \text{dans l'intervalle } [f_1; f_2]$$

d' où :

$$E_s = (x'[f_0; f_1]) \oplus (x''[f_1; f_2])$$

La variable x représentant le déplacement vibratoire.

Dans cet exemple le signal de sortie $E_s$ réalise la fonction

$$E_s = (x'[f_0; f_1]) \oplus (x''[f_1; f_2])$$

précisément aux asymptotes, c'est-à-dire proche des fréquences $f_0$ et $f_2$, et avec une certaine erreur autour de la fréquence de transition $f_1$.

EXEMPLES D'UN DEUXIEME SYSTEME ET D'UN DEUXIEME PROCEDE SELON L'INVENTION

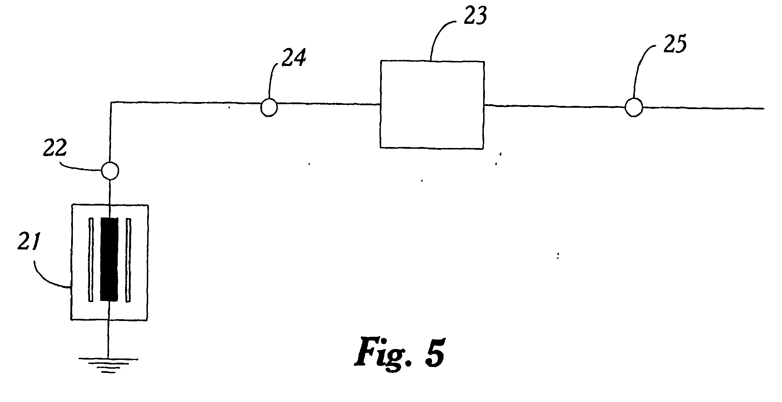

Comme représenté par le schéma de principe de la figure 5, un deuxième système selon l'invention pour mesurer les vibrations mécaniques d'un objet comprend un transducteur 21), lequel est monté sur un objet soumis à des vibrations, et un circuit électronique 23).

Le transducteur 21 a une sortie 22 sur laquelle il fournit un signal représentatif de la vitesse du mouvement vibratoire de l'objet. Ce signal a un spectre de fréquences comprenant une bande dite de basses fréquences, au dessous d'une fréquence dite de transition et une bande dite de hautes fréquences, au dessus de ladite fréquence de transition.

Le circuit électronique 23 a une entrée 24 connectée à la sortie 22 du transducteur 21 et une sortie 25. Le circuit 23 sert à traiter le signal fourni à la sortie 22 du transducteur 21. Le circuit 23 fournit sur sa sortie 25 un signal de sortie, lequel, dans ladite bande de basses fréquences, correspond à l'intégrale mathématique en fonction du temps du signal de sortie du transducteur 21, et, dans ladite bande de hautes fréquences, correspond audit signal de sortie du transducteur 21. Le signal de sortie fourni à la sortie 25 du circuit électronique 23 est donc tel que, dans ladite bande de basses fréquences, il correspond au déplacement associé au mouvement vibratoire de l'objet, et, dans ladite bande de hautes fréquences, il correspond à la vitesse du mouvement vibratoire de l'objet.

Le système de mesure selon la figure 5 permet donc la mise en oeuvre d'un deuxième procédé selon l'invention caractérisé en ce qu'il comprend:

le traitement d'un signal d'entrée représentatif d'une vitesse en rapport avec une vibration mécanique de l'objet examiné, ledit signal d'entrée ayant un spectre de fréquences comprenant une bande dite de basses fréquences, au-dessous d'une fréquence dite de transition et une bande dite de hautes fréquences, au dessus de ladite fréquence de transition, ledit procédé effectuant ledit traitement dudit signal d'entrée au moyen d'un circuit électronique pour produire un signal de sortie tel que le signal fourni à la sortie 25 du circuit électronique 23, ledit signal de sortie étant tel que

dans ladite bande de basses fréquences, il correspond à l'intégrale mathématique en fonction du temps dudit signal d'entrée, c'est-à-dire au déplacement vibratoire dudit objet, et

dans ladite bande de hautes fréquences, il correspond audit signal d'entrée, c'est-à-dire à la vitesse vibratoire dudit objet.

PREMIER EXEMPLE D'UN SYSTEME SELON LA FIGURE 5

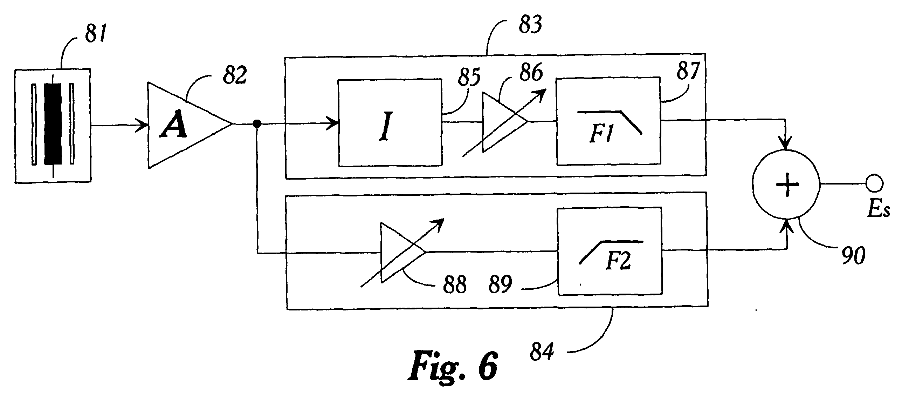

La figure 6 montre le schéma bloc d'une première forme d'exécution d'un système de mesure, dont le schéma de principe est montré par la figure 5. Le système montré par la figure 6 comprend un transducteur 81 monté sur un objet soumis à des vibrations (objet non-représenté sur la figure 6) et un circuit électronique 83 pour le traitement du signal de sortie fourni par le transducteur 81.

Le transducteur 81 a la fonction de vélocimètre et délivre comme signal de sortie une tension électrique représentative de la vitesse vibratoire de l'objet sur l'ensemble de la gamme de fréquences d'intérêt.

Le transducteur 81 est suivi d'un étage d'amplification 82 et peut comprendre, ou non, des éléments de correction.

L'amplificateur 82 est suivi de deux branches 83, 84 pour le traitement de son signal de sortie, lequel représente la vitesse vibratoire de l'objet.

La branche 83 comprend un intégrateur 85, lequel transforme le signal fourni à la sortie de l'amplificateur 82 et correspondant à la vitesse vibratoire en un signal correspondant au déplacement vibratoire. L'intégrateur 85 est suivi d'un amplificateur à gain ajustable 86, lequel est suivi d'un filtre passe-bas 87, dont la bande passante s'étend de $f_0$ à $f_1$.

La branche 84 comprend un amplificateur à gain ajustable 88 suivi d'un filtre passe-haut 89, dont la bande passante s'étend de $f_1$ à $f_2$

Les amplificateurs à gain ajustable 86 et 88 permettent de maîtriser les deux sensibilités, en déplacement vibratoire et en vitesse vibratoire.

Les signaux de sortie des branches 83 et 84 sont sommés au moyen d'un sommateur 90, lequel fournit un signal de sortie $E_s$, dont l'expression mathématique est:

$$E_s = x \quad dans \ l'intervalle \ [f_0; f_1]$$

$$E_s = dx/dt = x' \quad dans \ l'intervalle \ [f_1; f_2]$$

d'où:

$$E_s = (x[f_0; f_1]) \oplus (x'[f_1; f_2])$$

La variable x représentant le déplacement vibratoire.

DEUXIEME EXEMPLE D'UN SYSTEME SELON LA FIGURE 5

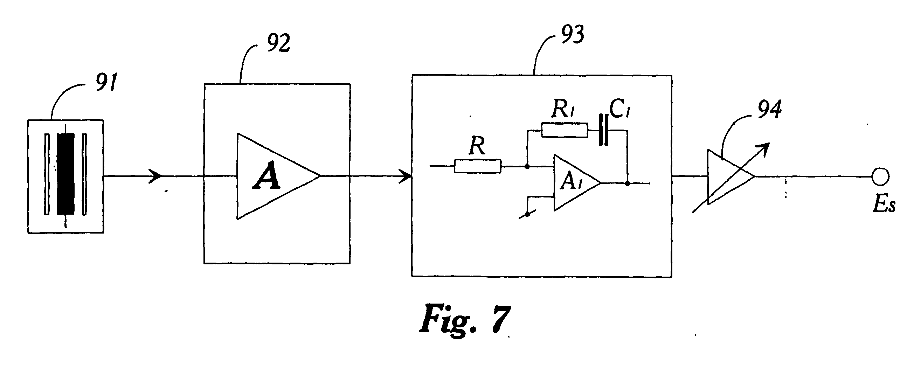

La figure 7 montre le schéma bloc d'un deuxième exemple d'un système de mesure, dont le schéma de principe est montré par la figure 5. Le système montré par la figure 7 comporte: un transducteur 91 monté sur un objet soumis à des vibrations (objet non-représenté sur la figure 7) et un circuit électronique pour le traitement du signal de sortie fourni par le transducteur 91.

Le transducteur 91 a la fonction de vélocimètre et délivre comme signal de sortie une tension électrique proportionnelle à la vitesse vibratoire de l'objet sur toute la gamme de fréquences d'intérêt.

Le transducteur 91 est suivi d'un amplificateur 92 possédant une dynamique adaptée dans toute la plage de fréquences utile. L'amplificateur 92 est suivi d'un circuit 93 pour le traitement de son signal de sortie. Le circuit 93 est à son tour suivi d'un amplificateur à gain ajustable 94.

Le circuit 93 est un intégrateur limité I/P, lequel a la structure montré dans la figure 7. Dans le circuit 93 le signal de sortie fourni par l'amplificateur 92 subit au sens électronique du terme une intégration I/P dite "limitée". Le terme d'intégration "limitée" se justifie par le fait que le circuit I/P agit comme un intégrateur mathématique dans la plage des basses fréquences jusqu'à la fréquence dite de transition $f_1$, domaine où l'impédance de la contre réaction de l'amplificateur qui forme partie de l'intégrateur I/P est essentiellement capacitive, puis devient résistive pour le domaine des hautes fréquences. La dite fréquence de transition $f_1$ obéit à la relation:

$$f1 = 1 \ / \ 2 \ \pi \ R_1 \ C_1$$

Le signal de sortie fourni par le circuit 93 est amplifié par l'amplificateur à gain ajustable 94.

L'amplificateur à gain ajustable 94 fournit un signal de sortie $E_s$ dont l'expression mathématique est la même que pour l'exemple décrit précédemment à l'aide de la figure 6:

$$E_s = x \qquad \text{dans l'intervalle } [f_0; f_1]$$

$$E_s = dx/dt = x' \quad \text{dans l'intervalle } [f_1; f_2]$$

d'où:

$$E_s = (x \; [f_0; f_1]) \; \oplus \; (x' \; [f_1; f_2])$$

La variable x représentant le déplacement vibratoire.

Dans cet exemple le signal de sortie $E_s$ réalise la fonction

$$E_s = (x \; [f_0; f_1]) \; \oplus \; (x' \; [f_1; f_2])$$

précisément aux asymptotes, c'est-à-dire proche des fréquences $f_0$ et $f_2$, et avec une certaine erreur autour de la fréquence de transition $f_1$.

REMARQUES GENERALES SUR LA STRUCTURE D'UN SYSTEME SELON L'INVENTION

Dans le cadre de l'invention aucune limitation n'est imposée quant au choix du type de transducteur utilisé. Les transducteurs mentionnés ci-dessus le sont à titre d'exemples.

On mentionne en outre: les accéléromètres piézo-électriques à électronique intégrée ayant un signal de sortie modulé en tension, les accéléromètres piézo-électriques à électronique intégrée ayant un signal de sortie modulé en courant électrique, les accéléromètres piézo-résistifs ayant un signal de sortie en tension, tous ces types de transducteurs peuvent être utilisés indifféremment avec les circuits électroniques représentés dans les figures 3 et 4.

Le vélocimètre optique peut être utilisé avec le circuit représenté dans les figures 6 et 7.

Le circuit électronique effectuant le traitement du signal fourni par le transducteur peut être soit incorporé dans le boîtier du transducteur, soit déporté de celui-ci. Dans le premier cas, il s'agit d'un transducteur à électronique intégrée, pour lequel la sortie 12 et la connexion 14 de la figure 1 sont physiquement confondus. Dans le deuxième cas, l'électronique déportée est placée dans un boîtier conditionneur, placé à distance du capteur ou transducteur.

Pour simplifier la description, dans les schémas représentés dans les figures en annexe on n'a pas représenté les composants suivants, lesquels sont pourtant nécessaires et leur emploi bien connu de l'homme du métier:

- un filtre passe-haut pour atténuer les très basses fréquences est placé en amont des parties du circuit servant à effectuer une opération d'intégration mathématique.
- un filtre passe-bas est aussi utilisé pour rejeter les hautes fréquences ou les parasites indésirables.

Dans chacun de circuits décrits ci-dessus avec référence aux figures, le signal de sortie $E_s$ peut être transmis sous forme de tension électrique ou à travers d'un convertisseur tension-courant, ou encore sous toute autre forme de transmission (optique, Hertzienne en modulation d'amplitude, en modulation de fréquence etc.).

COURBE DE REPONSE EN FREQUENCE D'UN SYSTEME DE MESURE SELON L'INVENTION

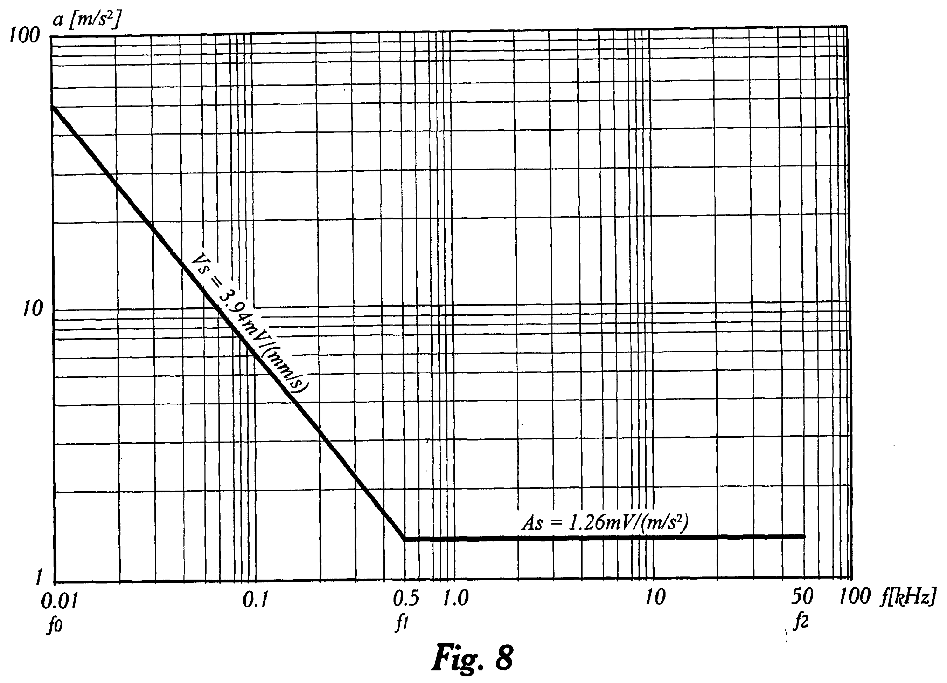

La figure 8 représente un exemple de courbe de réponse en fréquence d'un système selon l'invention, courbe avec échelles log-log, avec la fréquence exprimée en kHz sur l'axe horizontal et l'accélération exprimée en (m/s$^2$) sur l'axe vertical. Cette courbe donne la fonction de transfert entre un signal d'excitation vibratoire d'un niveau d'accélération constant de 1 m/s$^2$ sur toute la bande de fréquence d'intérêt (10 Hz à 50 kHz) et le signal de sortie du système de mesure dans ladite bande de fréquence d'intérêt.

La sensibilité de la chaîne de mesure pour cet exemple est $A_s$ = 1,26 mV/(m/s$^2$) représentative de l'accélération du mouvement vibratoire dans la bande de fréquence de $f_1$ = 500 Hz à $f_2$ = 50 kHz et $V_s$ = 3,94 mV/(mm/s) représentative de la vitesse du mouvement vibratoire dans la bande de fréquence de $f_0$= 10 Hz à $f_1$ = 500 Hz. La courbe de réponse en fréquence selon la figure 8 présente deux branches:

- la branche dans le domaine des basses fréquences représente l'intégration mathématique,

$$v(t) = \int a(t)dt \qquad\qquad v(f) = \frac{a(f)}{2.\pi.f}$$

ou:

$$\delta(t) = \int v(t)dt \qquad\qquad \delta(f) = \frac{v(f)}{2.\pi.f}$$

avec:

$\delta$ ou x :     déplacement vibratoire
$v$ ou $\dot{x}$ :     vitesse vibratoire
$a$ ou $\ddot{x}$ :     accélération vibratoire

et a une pente de -6 dB/octave.
- la branche dans le domaine des moyennes et hautes fréquences représente une sensibilité constante.

Dans l'exemple de représentation de la courbe de réponse en fréquence montrée par la figure 8, on a exclu les limites en très basses fréquences (inférieures à $f_0$), données par le filtre passe-haut, nécessaire avant l'opération d'intégration mathématique, et le filtre passe-bas, dont la fréquence limite supérieure est située en très hautes fréquences (supérieures à $f_2$), pour éliminer des signaux ou parasites indésirables.
Ces deux branches se joignent à une fréquence dite de transition $f_1$ .
Si l'on veut respecter la continuité de la courbe en $f_1$, les sensibilités en vitesse *Vs* et en accélération *As* suivent la relation suivante: $A_s$ = (1/(2 $\pi$ $f_1$)) $V_s$
et les sensibilités en déplacement Ds et en vitesse *Vs* suivent la même relation: $V_s$ = (1/(2 $\pi$ $f_1$)) $D_s$
Dans l'exemple de représentation de la courbe de réponse en fréquence montrée par la figure 8, la fréquence de transition est $f_1$ = 500 Hz, la limite inférieure de la bande dite de basse fréquence est $f_0$ = 10 Hz, et la limite supérieure de la bande dite de haute fréquence est $f_2$ = 50 kHz.

**Revendications**

1. Procédé pour mesurer les vibrations mécaniques d'un objet, ledit procédé étant **caractérisé en ce qu'**il comprend le traitement d'un signal d'entrée représentatif d'une accélération en rapport avec une vibration mécanique dudit objet, ledit signal d'entrée ayant un spectre de fréquences comprenant une bande dite de basses fréquences, au-dessous d'une fréquence dite de transition et une bande dite de hautes fréquences, au dessus de ladite fréquence de transition,
ledit traitement dudit signal d'entrée étant effectué au moyen d'un circuit électronique pour produire un signal de sortie, lequel
dans ladite bande de basses fréquences correspond à l'intégrale mathématique en fonction du temps dudit signal d'entrée, c'est-à-dire à la vitesse vibratoire dudit objet, et
dans ladite bande de hautes fréquences correspond audit signal d'entrée, c'est-à-dire à l'accélération vibratoire dudit objet.

2. Procédé pour mesurer les vibrations mécaniques d'un objet, ledit procédé étant **caractérisé en ce qu'**il comprend le traitement d'un signal d'entrée représentatif d'une vitesse en rapport avec une vibration mécanique dudit objet, ledit signal d'entrée ayant un spectre de fréquences comprenant une bande dite de basses fréquences, au dessous d'une fréquence dite de transition et une bande dite de hautes fréquences, au dessus de ladite fréquence de transition,

ledit traitement dudit signal d'entrée étant effectué au moyen d'un circuit électronique pour produire un signal de sortie, lequel

dans ladite bande de basses fréquences correspond à l'intégrale mathématique en fonction du temps dudit signal d'entrée, c'est-à-dire au déplacement vibratoire dudit objet, et

dans ladite bande de hautes fréquences correspond audit signal d'entrée, c'est-à-dire à la vitesse vibratoire dudit objet.

3.  Système pour mesurer les vibrations mécaniques d'un objet, ledit système étant **caractérisé en ce qu'**il comprend:

> (a) un transducteur (11) monté sur ledit objet, ledit transducteur (11) étant capable de fournir sur sa sortie (12) un signal, dit signal d'entrée, représentatif d'une accélération en rapport avec une vibration mécanique dudit objet, ledit signal d'entrée ayant un spectre de fréquences comprenant une bande dite de basses fréquences, au dessous d'une fréquence dite de transition et une bande dite de hautes fréquences, au dessus de ladite fréquence de transition, et
> (b) un circuit électronique (13) ayant une entrée (14) connectée à la sortie (12) dudit transducteur (11) et une sortie (15), ledit circuit (13) étant capable de traiter ledit signal d'entrée pour fournir sur sa sortie (15) un signal de sortie , lequel

> dans ladite bande de basses fréquences correspond à l'intégrale mathématique en fonction du temps dudit signal d'entrée, et
> dans ladite bande de hautes fréquences correspond audit signal d'entrée.

4.  Système pour mesurer les vibrations mécaniques d'un objet, ledit système étant **caractérisé en ce qu'**il comprend:

> (a) un transducteur (21) monté sur ledit objet, ledit transducteur étant capable de fournir sur sa sortie (22) un signal, dit signal d'entrée, représentatif d'une vitesse en rapport avec une vibration mécanique dudit objet, ledit signal d'entrée ayant un spectre de fréquences comprenant une bande dite de basses fréquences, au dessous d'une fréquence dite de transition et une bande dite de hautes fréquences, au dessus de ladite fréquence de transition, et
> (b) un circuit électronique (23) ayant une entrée (24) connectée à la sortie (22) dudit transducteur (21) et une sortie (25), ledit circuit (23) étant capable de traiter ledit signal d'entrée pour fournir sur sa sortie (25) un signal de sortie , lequel

> dans ladite bande de basses fréquences correspond à l'intégrale mathématique en fonction du temps dudit signal d'entrée, et
> dans ladite bande de hautes fréquences correspond audit signal d'entrée.

5.  Système selon la revendication 3, dans lequel le circuit électronique (13) comprend deux branches (33, 34):

> une première branche (33) comportant le montage en série d'un diviseur de charge ($C_1$), d'un amplificateur de charge (35), d'un intégrateur (37) et d'un filtre passe-bas (38), et
> une deuxième branche (34) comportant le montage en série d'un diviseur de charge ($C_2$), d'un amplificateur de charge (36) et d'un filtre passe-haut (39),

> les sorties de chacune des deux branches (33, 34) étant connectées aux entrées d'un sommateur (40).

6.  Système selon la revendication 3, dans lequel le circuit électronique (13) comprend un conditionneur (52) du signal fourni par le transducteur (51) et ledit conditionneur est suivi de deux branches (53, 54):

> une première branche (53) comportant le montage en série d'un intégrateur (55), d'un amplificateur à gain ajustable (56) et d'un filtre passe-bas (57), et
> une deuxième branche (54) comportant le montage en série d'un amplificateur à gain ajustable (58) et d'un filtre passe-haut (59),

> les sorties de chacune des deux branches (53, 54) étant connectées aux entrées d'un sommateur (60).

7. Système selon la revendication 3, dans lequel le circuit électronique (13) comprend un conditionneur (72) du signal fourni par le transducteur (71) et ledit conditionneur est suivi du montage en série d'un intégrateur limité (73) et d'un amplificateur à gain ajustable (74).

8. Système selon la revendication 4, dans lequel le circuit électronique (23) comprend un conditionneur (82) du signal fourni par le transducteur (81) et ledit conditionneur est suivi de deux branches (83, 84):

une première branche (83) comportant le montage en série d'un intégrateur (85), d'un amplificateur à gain ajustable (86) et d'un filtre passe-bas (87), et
une deuxième branche (84) comportant le montage en série d'un amplificateur à gain ajustable (88) et d'un filtre passe-haut (89),

les sorties de chacune des deux branches (83, 84) étant connectées aux entrées d'un sommateur (90).

9. Système selon la revendication 4, dans lequel le circuit électronique (23) comprend un conditionneur (92) du signal fourni par le transducteur (91) et ledit conditionneur est suivi du montage en série d'un intégrateur limité (93) et d'un amplificateur à gain ajustable (94).

10. Système selon l'une des revendications 3 à 9, **caractérisé en ce que** l'objet est un objet soumis à des vibrations, et en particulier une machine tournante ou une pièce tournante reliée à une telle machine.

**Patentansprüche**

1. Verfahren zur Messung der mechanischen Vibrationen eines Gegenstands, **gekennzeichnet durch** die Verarbeitung eines Eingangssignals, welches eine Beschleunigung infolge einer mechanischen Vibration des untersuchten Gegenstands darstellt, wobei das Eingangssignal ein Frequenzspektrum enthält, das ein als niederfrequent bezeichnetes Band unterhalb einer als Übergangsfrequenz bezeichneten Frequenz und ein als hochfrequent bezeichnetes Band oberhalb der Übergangsfrequenz enthält,
wobei die genannte Verarbeitung des Eingangssignals mittels einer elektronischen Schaltung erfolgt, um ein Ausgangssignal zu erzeugen, welches
im genannten Niederfrequenzbereich dem mathematischen Integral des genannten Eingangssignals nach der Zeit, d.h. der vibrationsbedingten Geschwindigkeit des Gegenstands, und
im genannten Hochfrequenzbereich dem genannten Eingangssignal, d.h. der vibrationsbedingten Beschleunigung des genannten Gegenstands entspricht.

2. Verfahren zur Messung der mechanischen Vibrationen eines Gegenstands, **gekennzeichnet durch** die Verarbeitung eines Eingangssignals, welches eine Geschwindigkeit infolge einer mechanischen Vibration des genannten Gegenstands darstellt, wobei das Eingangssignal ein Frequenzspektrum aufweist, das ein als niederfrequent bezeichnetes Band unterhalb einer als Übergangsfrequenz bezeichneten Frequenz und ein als hochfrequent bezeichnetes Band oberhalb der Übergangsfrequenz enthält
und die genannte Verarbeitung des Eingangssignals mittels einer elektronischen Schaltung erfolgt, um ein Ausgangssignal zu erzeugen, welches
im genannten Niederfrequenzbereich dem mathematischen Integral des genannten Eingangssignals nach der Zeit, d.h. der vibrationsbedingten Verschiebung des genannten Gegenstands, und
im genannten Hochfrequenzbereich dem genannten Eingangssignal, d.h. der vibrationsbedingten Geschwindigkeit des genannten Gegenstands entspricht.

3. Verfahren zur Messung der mechanischen Vibrationen eines Gegenstands, **gekennzeichnet durch**

(a) einen am genannten Gegenstand montierten Wandler (11), der dazu in der Lage ist, an seinem Ausgang (12) ein als Eingangssignal bezeichnetes Signal zu liefern, welches eine Beschleunigung infolge einer mechanischen Vibration des genannten Gegenstands darstellt, wobei das Eingangssignal ein Frequenzspektrum aufweist, das ein als niederfrequent bezeichnetes Band unterhalb einer als Übergangsfrequenz bezeichneten Frequenz und ein als hochfrequent bezeichnetes Band oberhalb der Übergangsfrequenz enthält,
(b) eine elektronische Schaltung (13) mit einem Eingang (14), der am Ausgang (12) des genannten Wandlers (11) angeschlossen ist, und einem Ausgang (15), wobei die genannte Schaltung (13) dazu in der Lage ist, das genannte Eingangssignal zu verarbeiten, um am Ausgang (15) ein Ausgangssignal zu liefern,

welches im genannten Niederfrequenzband dem mathematischen Integral des genannten Eingangssignals nach der Zeit und
im genannten Hochfrequenzband dem genannten Eingangssignal entspricht.

4. Verfahren zur Messung der mechanischen Vibrationen eines Gegenstands, **gekennzeichnet durch**

(a) einen am genannten Gegenstand montierten Wandler (21), der dazu in der Lage ist, an seinem Ausgang (22) ein als Eingangssignal bezeichnetes Signal zu liefern, welches eine Geschwindigkeit infolge einer mechanischen Vibration des genannten Gegenstands darstellt, wobei das Eingangssignal ein Frequenzspektrum aufweist, das ein als niederfrequent bezeichnetes Band unterhalb einer als Übergangsfrequenz bezeichneten Frequenz und ein als hochfrequent bezeichnetes Band oberhalb der Übergangsfrequenz enthält,
(b) eine elektronische Schaltung (23) mit einem Eingang (24), der am Ausgang (22) des genannten Wandlers (21) angeschlossen ist, und einem Ausgang (25), wobei die genannte Schaltung (23) dazu in der Lage ist, das genannte Eingangssignal zu verarbeiten, um am Ausgang (25) ein Ausgangssignal zu liefern, welches

im genannten Niederfrequenzband dem mathematischen Integral des genannten Eingangssignals nach der Zeit und
im genannten Hochfrequenzband dem genannten Eingangssignal entspricht.

5. System nach Anspruch 3, in welchem die elektronische Schaltung (13) zwei Zweige (33, 34) aufweist:

einen ersten Zweig (33) mit einem Ladungsteiler ($C_1$) in Serie mit einem Ladungsverstärker (35), einem Integrator (37) und einem Tiefpassfilter (38), und
einen zweiten Zweig (34) mit einem Ladungsteiler ($C_2$) in Serie mit einem Ladungsverstärker (36) und einem Hochpassfilter (39),

wobei die Ausgänge der beiden Zweige (33, 34) mit je einem Eingang eines Summierers (40) verbunden sind.

6. System nach Anspruch 3, in welchem die elektronische Schaltung (13) eine Aufbereitungseinheit (52) für das vom Wandler (51) gelieferte Signal aufweist, gefolgt von zwei Zweigen (53, 54):

einen ersten Zweig (53) mit einem Integrator (55) in Serie mit einem Verstärker mit einstellbarem Verstärkungsgrad (56) und einem Tiefpassfilter (57) und
einen zweiten Zweig (54) mit einem Verstärker mit einstellbarem Verstärkungsgrad (58) in Serie mit einem Hochpassfilter (59),

wobei die Ausgänge der beiden Zweige (53, 54) mit je einem Eingang eines Summierers (60) verbunden sind.

7. System nach Anspruch 3, in welchem die elektronische Schaltung (13) eine Aufbereitungseinheit (72) für das vom Wandler (71) gelieferte Signal aufweist, gefolgt von einem begrenzten Integrator (73) in Serie mit einem Verstärker mit einstellbarem Verstärkungsgrad (74).

8. System nach Anspruch 4, in welchem die elektronische Schaltung (23) eine Aufbereitungseinheit (82) für das vom Wandler (81) gelieferte Signal aufweist, gefolgt von zwei Zweigen (83, 84):

einen ersten Zweig (83) mit einem Integrator (85) in Serie mit einem Verstärker mit einstellbarem Verstärkungsgrad (86) und einem Tiefpassfilter (87) und
einen zweiten Zweig (84) mit einem Verstärker mit einstellbarem Verstärkungsgrad (88) in Serie mit einem Hochpassfilter (89),

wobei die Ausgänge der beiden Zweige (83, 84) mit je einem Eingang eines Summierers (90) verbunden sind.

9. System nach Anspruch 4, in welchem die elektronische Schaltung (23) eine Aufbereitungseinheit (92) für das vom Wandler (91) gelieferte Signal aufweist, gefolgt von einem begrenzten Integrator (93) in Serie mit einem Verstärker mit einstellbarem Verstärkungsgrad (94).

10. System nach einem der Ansprüche 3 bis 9, **dadurch gekennzeichnet, dass** der Gegenstand ein vibrierender Gegenstand ist, insbesondere eine drehende Maschine oder ein mit einer solchen Maschine verbundenes drehendes Teil.

**Claims**

1. Method for measuring the mechanical vibrations of an object, the method being **characterised in that** it comprises processing an input signal that represents an acceleration related to a mechanical vibration of the object, the input signal having a frequency spectrum comprising a low frequency band below a transition frequency and a high frequency band above that transition frequency,

   the processing of the input signal being performed by means of an electronic circuit for producing an output signal which

   in the low frequency band corresponds to the mathematical integral with respect to time of the input signal, i.e. to the vibration velocity of the object, and

   in the high frequency band corresponds to the input signal, i.e. to the vibration acceleration of the object.

2. Method for measuring the mechanical vibrations of an object, the method being **characterised in that** it comprises processing an input signal that represents a velocity related to a mechanical vibration of the object, the input signal having a frequency spectrum comprising a low frequency band below a transition frequency and a high frequency band above that transition frequency,

   the processing of the input signal being performed by means of an electronic circuit for producing an output signal which

   in the low frequency band corresponds to the mathematical integral with respect to time of the input signal, i.e. to the vibration displacement of the object, and

   in the high frequency band corresponds to the input signal, i.e. to the vibration velocity of the object.

3. System for measuring the mechanical vibrations of an object, the system being **characterised in that** it comprises:

   (a) a transducer (11) that is mounted on the object, the transducer (11) being capable of delivering at its output (12) a signal called input signal that represents an acceleration related to a mechanical vibration of the object, the input signal having a frequency spectrum comprising a low frequency band below a transition frequency and a high frequency band above that transition frequency, and

   (b) an electronic circuit (13) having an input (14) connected to the output (12) of the transducer (11) and an output (15), the circuit (13) being capable of processing the input signal for delivering an output signal at its output (15) which

   in the low frequency band corresponds to the mathematical integral with respect to time of the input signal and
   in the high frequency band corresponds to the input signal.

4. System for measuring the mechanical vibrations of an object, the system being **characterised in that** it comprises:

   (a) a transducer (21) that is mounted on the object, the transducer being capable of delivering at its output (22) a signal, called input signal, that represents a velocity related to a mechanical vibration of the object, the input signal having a frequency spectrum comprising a low frequency band below a transition frequency and a high frequency band above that transition frequency, and

   (b) an electronic circuit (23) having an input (24) connected to the output (22) of the transducer (21) and an output (25), the circuit (23) being capable of processing the input signal for delivering an output signal at its output (25) which

   in the low frequency band corresponds to the mathematical integral with respect to time of the input signal and
   in the high frequency band corresponds to the input signal.

5. System according to claim 3, in which the electronic circuit (13) comprises two branches (33, 34):

   a first branch (33) comprising the serial connection of a charge divider ($C_1$), a charge amplifier (35), an integrator (37), and a low-pass filter (38), and
   a second branch (34) comprising the serial connection of a charge divider ($C_2$), a charge amplifier (36), and a high-pass filter (39),

   the outputs of each of the two branches (33, 34) being connected to the inputs of an adder (40).

6. System according to claim 3, in which the electronic circuit (13) comprises a conditioner (52) for the signal delivered by the transducer (51) and the conditioner is followed by two branches (53, 54):

a first branch (53) comprising the serial connection of an integrator (55), an adjustable gain amplifier (56), and a low-pass filter (57), and
a second branch (54) comprising the serial connection of an adjustable gain amplifier (58) and a high-pass filter (59),

the outputs of each of the two branches (53, 54) being connected to the inputs of an adder (60).

7. System according to claim 3, in which the electronic circuit (13) comprises a conditioner (72) for the signal delivered by the transducer (71) and the conditioner is followed by the serial connection of a limited integrator (73) and of an adjustable gain amplifier (74).

8. System according to claim 4, in which the electronic circuit (23) comprises a conditioner (82) for the signal delivered by the transducer (81) and the conditioner is followed by two branches (83, 84):

a first branch (83) comprising the serial connection of an integrator (85), an adjustable gain amplifier (86), and a low-pass filter (87), and
a second branch (84) comprising the serial connection of an adjustable gain amplifier (88) and a high-pass filter (89),

the outputs of each of the two branches (83, 84) being connected to the inputs of an adder (90).

9. System according to claim 4, in which the electronic circuit (23) comprises a conditioner (92) for the signal delivered by the transducer (91) and the conditioner is followed by the serial connection of a limited integrator (93) and of an adjustable gain amplifier (94).

10. System according to one of claims 3 to 9, **characterised in that** the object is an object that is subject to vibrations, more particularly a rotary machine or a rotating member connected to such a machine.

13

14

15

12

11

**Fig. 1**

EP 1 054 243 B1

Fig. 2

16

Fig. 3

*Fig. 4*

*Fig. 5*

EP 1 054 243 B1

*Fig. 6*

*Fig. 7*

$E_s$

94

93

$R_I$ $C_I$

$A_I$

$R$

92

$A$

91

21

*Fig. 8*